# EUROPÄISCHE PATENTSCHRIFT

(11) **EP 2 127 727 B1**
(45) Veröffentlichungstag und Bekanntmachung des Hinweises auf die Patenterteilung: **09.04.2014**
(21) Anmeldenummer: 09007230.7
(22) Anmeldetag: 29.05.2009
(51) Int. Cl.: B01D 53/26, B60T 17/00, B60T 17/02

(54) **Lufttrockner mit integrierter Regenerationssteuerung und Verfahren zum Betreiben eines Lufttrockners**
Air dryer with integrated regeneration control and method for operating same
Dessiccateur d'air doté d'une commande de régénération intégrée et procédé de fonctionnement d'un dessiccateur d'air

(30) Priorität: 30.05.2008 DE 102008026103
(43) Veröffentlichungstag der Anmeldung: 02.12.2009
(73) Patentinhaber: KNORR-BREMSE Systeme für Nutzfahrzeuge GmbH, 80809 München (DE)
(72) Erfinder: Hilberer, Eduard, 68766 Hockenheim (DE); Muser, Michael, 85276 Pfaffenhofen (DE); Krinner, Wolfgang, 80807 München (DE); Fries, Ansgar, 80993 München (DE); Savágó, Szabolcs, 6000 Kecskemét (HU); Nagy, Istzván, Kecskemét-Hetényegyháza (HU)
(74) Vertreter: Schönmann, Kurt

(56) Entgegenhaltungen:
- EP-A- 0 272 738
- EP-A- 0 976 636
- WO-A-02/24505
- WO-A-02/24506
- WO-A-2008/095703
- DE-A1- 3 514 989
- DE-A1- 19 515 895
- DE-A1- 19 632 754
- DE-A1- 19 835 638
- DE-A1-102007 011 256
- DE-B3-102006 019 865
- FR-A- 2 514 098
- US-A- 3 714 763
- US-A- 5 678 900

## Beschreibung

Die Erfindung betrifft einen Lufttrockner mit einer in einem gemeinsamen Gehäuse integrierten Regenerationssteuerung für ein Nutzfahrzeug, wobei der Lufttrockner einen Drucklufteingang, eine in einer Förderleitung angeordnete ein Trockenmittel umfassende Luftaufbereitungseinrichtung, ein an der Förderleitung in einer Förderphase stromaufwärts der Luftaufbereitungseinrichtung angeordnetes Luftablassventil, ein in einer Förderphase in der Förderleitung stromabwärts der Luftaufbereitungseinrichtung angeordnetes Rückschlagventil und eine, abhängig von dem Druckniveau in der Förderleitung, das Luftablassventil vorsteuernde Ablasssteuerventileinrichtung umfasst, und wobei ein abhängig von dem Druckniveau in der Förderleitung schaltendes Regenerationssteuerventil parallel zu dem Rückschlagventil an der Förderleitung angeordnet ist.

Die Erfindung betrifft weiterhin ein Verfahren zum Betreiben eines Lufttrockners mit integrierter Regenerationssteuerung für ein Nutzfahrzeug, wobei der Lufttrockner einen Drucklufteingang, eine in einer Förderleitung angeordnete ein Trockenmittel umfassende Luftaufbereitungseinrichtung, ein an der Förderleitung in einer Förderphase stromaufwärts der Luftaufbereitungseinrichtung angeordnetes Luftablassventil, ein in einer Förderphase in der Förderleitung stromabwärts der Luftaufbereitungseinrichtung angeordnetes Rückschlagventil und eine, abhängig von dem Druckniveau in der Förderleitung, das Luftablassventil vorsteuernde Ablasssteuerventileinrichtung umfasst, wobei bei einem Überschreiten eines oberen Druckniveaus in der Förderleitung ein parallel zu dem Rückschlagventil an der Förderleitung angeordnetes Regenerationssteuerventil angesteuert wird und einen Regenerationsluftpfad freigibt, und wobei bei einem Unterschreiten eines unteren Druckniveaus in der Förderleitung das parallel zu dem Rückschlagventil an der Förderleitung angeordnete Regenerationssteuerventil nicht mehr angesteuert und der Regenerationsluftpfad wieder geschlossen wird.

Nutzfahrzeuge verfügen oftmals über eine große Anzahl von Druckluft verbrauchenden Teilsystemen, wie zum Beispiel einer druckluftbetriebenen Betriebsbremse, einer Luftfederung oder einer pneumatischen Getriebesteuerung. Zur Versorgung dieser Teilsysteme mit Druckluft ist üblicherweise eine Druckluftversorgungseinrichtung mit einem integrierten Lufttrockner in dem Nutzfahrzeug vorgesehen. Die Druckluftversorgungseinrichtung erzeugt und verteilt Druckluft, die in dem integrierten Lufttrockner zunächst von Öl- und Schmutzpartikeln befreit und anschließen getrocknet wird. Diese Aufbereitung der Druckluft ist notwendig, da ansonsten die in der Druckluft vorhandene Luftfeuchtigkeit und die Öl- und Schmutzpartikel einen erhöhten Verscheiß der angeschlossenen mit Druckluft versorgten Teilsysteme verursachen würden. Insbesondere das in dem Lufttrockner vorhandene Trockenmittel muss, um eine gleich bleibende Trocknungswirkung zu erzielen, durch ein Regenerationsverfahren von der gespeicherten Feuchtigkeit befreit werden, wenn die Aufnahmekapazität des Trockenmittels erschöpft ist.

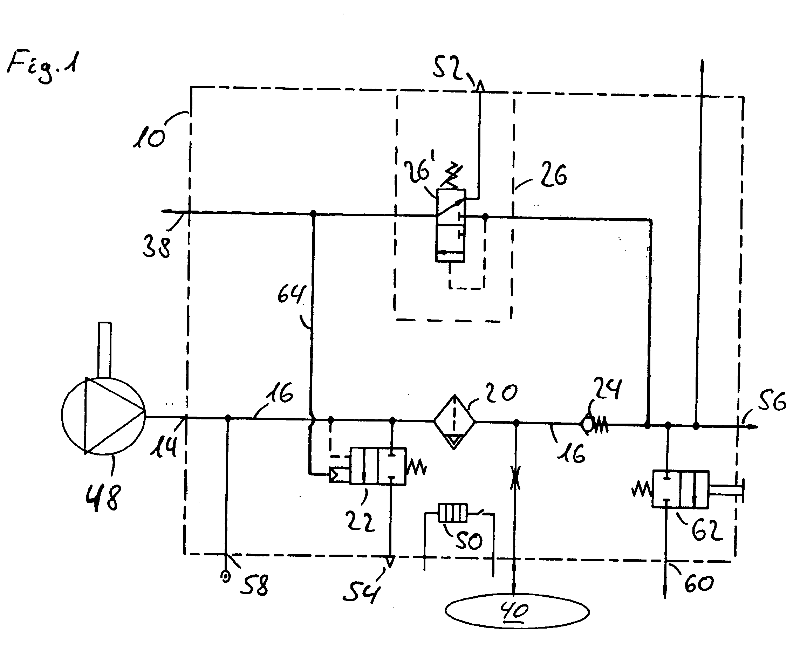

Eine Möglichkeit ein solches Regenerationsverfahren einzuleiten besteht darin, bei Erreichen eines vorgebbaren Druckniveaus automatisch eine Regenerationsphase einzuleiten, wobei Regenerationsluft aus einem separat dafür vorgesehenen Regenerationsluftbehälter durch das Trockenmittel rückströmt und über ein Ablassventil entweicht. Ein derartiges System wird im Zusammenhang mit Figur 1 erläutert.

Nachteilig bei einem derartigen System ist insbesondere, dass ein separater Drucklufttank zum Bereitstellen der Regenerationsluft vorgesehen ist, wobei bei jedem Regenerationszyklus das gesamte vorhandene Regenerationsluftvolumen verwendet wird. Dies bedeutet insbesondere während eines Autobahnbetriebs, während dem üblicherweise nur ein geringer Druckluftverbrauch vorhanden ist, eine enorme Energieverschwendung in Form von unnötig abgelassener Druckluft. Weiterhin benötigt eine derartige Anlage in einem Fahrzeug aufgrund des vorzusehenden separaten Drucklufttanks und dem abstehenden separaten Schalldämpfer viel zusätzlichen Raum, der insbesondere bei Reisebussen kaum vorhanden ist.

Die DE 198 356 38 A1 beschreibt eine elektronische Druckluftaufbereitungsanlage, die bei einem Stromausfall eine pneumatische Steuerung der Regenerationszyklen ermöglicht. Im Rahmen dieser pneumatischen Steuerung wird durch einen an einem Druckreglerausgang anstehenden Druck bei Überschreiten eines Schwellenwertes ein pneumatisches Vorsteuerventil betätigt, welches seinerseits ein Regenerationsventil betätigt, um einen Regenerationsluftpfad freizugeben.

Aus der US 5,678,900 A ist ein Lufttrockner mit einer ein Trockenmittel umfassenden Luftaufbereitungseinrichtung bekannt, wobei die Luftaufbereitungseinrichtung ein Filter zum Abscheiden von Öl- und Schmutzpartikeln umfasst. In Abhängigkeit von einem Druckniveau in der Förderleitung wird ein parallel zu einem in der Förderleitung angeordneten Rückschlagventil angeordnetes Regenerationssteuerventil angesteuert, um einen Regenerationsluftpfad freizugeben.

Die US 3,714,763 A beschreibt eine Vorrichtung und ein Verfahren zum Trocknen von Luft für eine Druckluftbremse, bei der die zu trocknende Luft durch ein feuchtigkeitabsorbierendes Material geleitet wird. Ein Teil der getrockneten Luft wird zur Regeneration des Feuchtigkeit anziehenden Materials zurückgeleitet.

Aus der DE 10 2006 019865 B3 ist eine Druckluftaufbereitungsanlage und ein Verfahren zum Betrieb eine Druckluftaufbereitungsanlage bekannt, bei der in einer zur Aufbereitung der Druckluft verwendeten Kartusche ein Sensor angeordnet ist, mit dem beispielsweise eine Feuchte sensiert wird, und wobei nach Maßgabe des Signals des Sensors eine Umschaltung zwischen einem Druckluftaufbereitungskreislauf und einem Regenerationskreislauf erfolgt.

Der Erfindung liegt daher die Aufgabe zugrunde, einen Lufttrockner mit integrierter Regenerationsfähigkeit bei gleichzeitig verringertem Raumbedarf bereitzustellen, dessen Regenerationszyklen optimiert sind und dessen Komponenten gleichzeitig eine hohe Lebensdauer aufweisen.

Diese Aufgabe wird mit den Merkmalen der unabhängigen Ansprüche gelöst.

Vorteilhafte Ausgestaltungen und Weiterbildungen der Erfindung ergeben sich aus den abhängigen Ansprüchen.

Die Erfindung baut auf dem gattungsgemäßen Lufttrockner dadurch auf, dass die Luftaufbereitungseinrichtung einen Zyklonfilter zum Abscheiden von Öl- und Schmutzpartikeln umfasst und dass in einer pneumatischen Steuerleitung zum Ansteuern des Regenerationssteuerventils eine Drossel angeordnet ist. Das in Abhängigkeit von dem Druckniveau schaltende Regenerationsventil, das geeignet ist, einen Druckluftpfad zur Regeneration unter Umgehung des Rückschlagventils in der Förderleitung freizuschalten, ermöglicht in einfacher Weise eine Begrenzung der zur Regeneration verwendeten Druckluft, die insbesondere aus den Vorratsbehältern der Betriebsbremse, das heißt aus den Vorratsbehältern angeschlossener Teilsysteme des Nutzfahrzeugs entnehmbar ist. Ein separater Druckluftvorrat zur Regeneration kann somit eingespart werden, ohne dass Gefahr besteht, dass ein druckluftbetriebenes Teilsystem des Nutzfahrzeugs plötzlich nicht mehr über eine ausreichende Druckversorgung verfügt. Der in der Luftaufbereitungseinrichtung vorgesehene Zyklonfilter zum Abscheiden von Öl- und Schmutzpartikeln arbeitet in üblicher Weise unter Ausnutzung von Zentrifugalkräften, die geeignet sind, Öl- und Schmutzpartikel aufgrund ihrer Trägheit vom übrigen Luftstrom zu trennen. Dadurch werden die in einer Förderphase stromabwärts des Zyklonfilters angeordneten Bestandteile des Lufttrockners beziehungsweise der angeschlossenen Teilsysteme des Nutzfahrzeugs vor Ablagerungen in Form von Öl und Schmutz geschützt. Insbesondere vorteilhaft ist dabei, dass der Zyklonfilter selbst bauartbedingt praktisch verschleißfrei ist, wobei lediglich abgeschiedenes Material von Zeit zu Zeit während einer Regenerationsphase ausgespült werden muss. Ist der Druckluftpfad zur Regeneration durch das Regenerationssteuerventil freigegeben, so fällt nach dem Beginn des Regenerationszyklus der Druck in der Förderleitung ab. Durch die Drossel wird dabei verhindert, dass auch in der pneumatischen Steuerleitung, ein gleichzeitiger Druckabfall erfolgt. Der Druckabfall erfolgt vielmehr zeitlich verzögert kontinuierlich über einen vom Drosselquerschnitt abhängigen Zeitraum. Die Drossel stellt also einen wesentlichen Bestandteil eines pneumatisch arbeitenden Zeitschalters dar.

Der erfindungsgemäße Lufttrockner kann insbesondere dadurch weiterentwickelt werden, dass ein Mehrkreisschutzventil in dem gemeinsamen Gehäuse des Lufttrockners integriert ist. Die Integration des Mehrkreisschutzventils, das beispielsweise als Vierkreisschutzventil ausgeführt sein kann, spart ansonsten notwendigen zusätzlichen Bauraum, zum Beispiel in Form von Verrohrungen, ein.

Vorteilhafterweise kann vorgesehen sein, dass in Serie zu dem Regenerationssteuerventil und parallel zu dem Rückschlagventil eine Regenerationsleitungsdrossel angeordnet ist. Durch die Regenerationsleitungsdrossel ist der Volumenstrom der Regenerationsluft dosierbar, wobei gleichzeitig ein zu schneller Druckabfall durch eine zu große Regenerationsluftmenge verhinderbar ist.

Besonders bevorzugt ist dabei vorgesehen, dass die in dem Lufttrockner angeordnete Regenerationsleitungsdrossel und/oder die Drossel zumindest teilweise verstellbar sind. Die Einstellbarkeit der Drosselwirkung von Regenerationsleitungsdrossel und/oder Drossel erlaubt eine exakte Anpassung an die übrigen in dem Lufttrockner verbauten Ventileinrichtungen. Herstellungsbedingte Schwankungen bei Schaltwiderständen und freigebbaren Strömungsquerschnitten können so ausgeglichen werden.

Vorzugsweise ist dabei vorgesehen, dass die pneumatische Steuerleitung zum Ansteuern des Regenerationssteuerventils in einer Förderphase Stromaufwärts des Rückschlagventils angeordnet ist. Die Entnahme von Steuerdruck stromaufwärts des Rückschlagventils zur Ansteuerung des Regenerationssteuerventils ermöglicht den kontinuierlichen Druckabfall während einer Regenerationsphase, die schließlich zum Schließen des Regenerationssteuerventils führt.

Im Zusammenhang mit der Steuerung des Regenerationszyklus kann vorgesehen sein, dass das Regenerationssteuerventil ein elektrisch betätigbares Magnetventil ist.

Nützlicherweise ist vorgesehen, dass ein Schalldämpfer in Form einer in dem gemeinsamen Gehäuse angeordneten Schalldämmung auf einer einer Lufttrocknerpatrone abgewandten Seite des Gehäuses integriert ist. Die Integration des Schalldämpfers in das Gehäuse ist hinsichtlich der Ausnutzung des vorhandenen Bauraums vorteilhaft.

Dabei kann insbesondere vorgesehen sein, dass die in das gemeinsame Gehäuse integrierte Schalldämmung mit einer formschlüssig mit dem Gehäuse verbundenen Abschlussplatte in dem Gehäuse fixiert ist. Auf diese Weise kann ein normalerweise vorzusehender von dem Gehäuse abstehender Endschalldämpfer eingespart werden, wodurch weiterer Bauraum eingespart wird.

Von Vorteil ist auch, dass das Regenerationssteuerventil, insbesondere ein Regenerationsventilsteuerkolben und ein Regenerationssteuerventilsitz des Regenerationssteuerventils, während eines normalen Betriebszustands rechtwinklig zur Erdanziehungskraft angeordnet ist. Unter einem normalen Betriebszustand wird dabei insbesondere die Ausrichtung des Fahrzeugs auf einer Straße verstanden, wobei die Räder des Fahrzeugs in Kontakt mit der Straßenoberfläche stehen. Dies erschwert die Ablagerung von Verschmutzungen an kritischen Stellen im Sekundärbereich der Filterpatrone.

Weiterhin kann vorgesehen sein, dass eine Spülbohrung während eines normalen Betriebszustands in Richtung der Erdanziehungskraft angeordnet ist. Auch hier ist ein normaler Betriebszustand darin zu sehen, dass die Räder eines Fahrzeugs zum Straßenbelag hin ausgerichtet sind.

Des Weiteren kann vorgesehen sein, dass ein Kompressorsteuerausgang des Lufttrockners zusammen mit einer pneumatischen Steuerleitung des Luftablassventils belüftet wird. Das gleichzeitige Ansteuern von Ablassventil und Kompressorsteuerausgang stellt sicher, dass die Druckluftförderung während einer Regenerationsphase eingestellt wird.

Besonders bevorzugt ist, dass in einer das Luftablassventil ansteuernden pneumatischen Steuerleitung eine Ablassventildrossel angeordnet ist. Die Ablassventildrossel in der das Luftablassventil ansteuernden pneumatischen Steuerleitung erlaubt insbesondere ein zeitlich versetztes Schließen von dem Ablassventil und dem das Ablassventil vorsteuernden Ventil. Auf diese Weise ist beispielsweise ein Nachlauf eines Kompressors zur Spülung der Förderleitung realisierbar, der beispielsweise über einen Kompressorsteuerausgang ansteuerbar ist und ebenfalls von dem das Ablassventil vorsteuernden Ventil ansteuerbar sein kann.

Nützlicherweise ist dabei vorgesehen, dass die Ablasssteuerventileinrichtung ein pneumatisch betätigbares Ventil umfasst, das in einer Schaltstellung eine pneumatische Steuerleitung des Luftablassventils direkt belüftet. Das direkte Belüften der pneumatischen Steuerleitung des Luftablassventils bietet eine effiziente Möglichkeit zur Ansteuerung des Luftablassventils mit wenigen Bauteilen. Das pneumatisch betätigbare Ventil ist dabei vorzugsweise als 3/2-Wegeventil mit eigener Entlüftung ausgeführt.

Alternativ kann vorgesehen sein, dass die Ablasssteuerventileinrichtung ein weiteres pneumatisch betätigbares Ventil umfasst, das das pneumatisch betätigbare Ventil pneumatisch vorsteuert. Das pneumatische Vorsteuern des das Ablassventil vorsteuernden Ventils ermöglicht insbesondere die Verwendung eines kleinen präzise schaltenden Ventils, das ein Ventil mit größerem Luftdurchsatz und größeren Schaltkräften steuert. Die benötigte Schaltpräzision kann daher unabhängig von dem benötigen .Schaltvolumen des Ablassventils erreicht werden, was die Konstruktion insgesamt vereinfacht.

Vorteilhafterweise kann vorgesehen sein, dass der Zyklonfilter separat von dem Trockenmittel austauschbar ist. Da das Trockenmittel üblicherweise einen höheren Verschleiß als der Zyklonfilter aufweist, ist eine separate Austauschbarkeit beider Komponenten der Luftfiltereinrichtung vorteilhaft.

Insbesondere kann vorgesehen sein, dass der Zyklonfilter in einer Förderphase stromaufwärts des Trockenmittels angeordnet ist. Auf diese Weise kann der Zyklonfilter das Trockenmittel vor dem Eindringen von Öl- und Schmutzpartikeln schützen. Ist dem Trockenmittel ein separater zum Schutz vor Öl- und Schmutzpartikeln zugeordnet, so wird die Lebensdauer dieses separaten Filters durch den Zyklonfilter erhöht.

Das gattungsgemäße Verfahren wird dadurch weiterentwickelt, dass in einem der Luftaufbereitungseinrichtung zugeordneten Zyklonfilter Öl- und Schmutzpartikel abgeschieden werden, dass das Regenerationssteuerventil über eine in einer pneumatischen Steuerleitung angeordnete Drossel angesteuert wird. Auf diese Weise werden die Vorteile und Besonderheiten des erfindungsgemäßen Lufttrockners auch mit Rahmen eines Verfahrens zum Betreiben eines Lufttrockners umgesetzt. Dies gilt auch für die nachfolgend ang-gebenen besonders bevorzugten Ausführungsformen des erfindungsgemäßen Verfahrens.

Diese wird vorzugsweise dadurch weiterentwickelt, dass eine in dem Regenerationsluftpfad angeordnete einstellbare Regenerationsleitungsdrossel in Abhängigkeit von den genauen Betriebseigenschaften des Lufttrockners eingestellt wird.

Nützlicherweise ist vorgesehen, dass eine Zeitbegrenzung des Regenerationszyklus durch ein elektrisch betätigbares Regenerationssteuerventil vorgenommen wird. Ein elektrisch betätigbares Regenerationssteuerventil bietet eine größtmögliche Flexibilität hinsichtlich des Regenerationszeitpunkts.

Vorzugsweise ist vorgesehen, dass eine in einer pneumatischen Steuerleitung zum Ansteuern des Regenerationssteuerventils angeordnete einstellbare Drossel in Abhängigkeit von den genauen Betriebseigenschaften des Lufttrockners eingestellt wird.

Insbesondere kann vorgesehen sein, dass die Ablasssteuerventileinrichtung bei einem Überschreiten eines oberen Ablassdruckniveaus in der Förderleitung das Luftablassventil ansteuert und dass die Ablasssteuerventileinrichtung bei einem Unterschreiten eines unteren Ablassdruckniveaus in der Förderleitung das Luftablassventil nicht mehr ansteuert. Unterschiedliche Schaltdrücke der Ablasssteuerventileinrichtung im Vergleich zu den Schaltdrücken des Regenerationssteuerventils ermöglichen eine flexiblere und sparsamere Durchführung von Regenerationszyklen.

In diesem Zusammenhang kann vorgesehen sein, dass ein Kompressorsteuerausgang des Lufttrockners gemeinsam mit dem Luftablassventil von der Ablasssteuerventileinrichtung angesteuert wird.

Die Erfindung wird nun mit Bezug auf die begleitenden Zeichnungen anhand besonders bevorzugter Ausführungsformen beispielhaft erläutert.

Es zeigen:
- Figur 1: eine schematische Ventilschaltung eines Lufttrockners gemäß dem Stand der Technik;
- Figur 2: einen Querschnitt durch einen Lufttrockner mit aufgesetzter Lufttrocknerpatrone gemäß dem Stand der Technik;
- Figur 3: eine schematische Ventilschaltung einer ersten Ausführungsform eines erfindungsgemäßen Lufttrockners;
- Figur 4: eine schematische Ventilschaltung einer zweiten Ausführungsform eines erfindungsgemäßen Lufttrockners;
- Figur 5: einen Querschnitt durch einen erfindungsgemäßen Lufttrockner mit aufgesetzter Lufttrocknerpatrone;
- Figur 6: einen Ausschnitt eines geschnittenen Lufttrockners zur Veranschaulichung der Annordung des Zykonfilters und
- Figur 7: den zeitlichen Druckverlauf in einem erfindungsgemäßen Lufttrockner.

In den folgenden Zeichnungen bezeichnen gleiche Bezugszeichen gleiche oder gleichartige Teile.

Figur 1 zeigt eine schematische Ventilschaltung eines Lufttrockners gemäß dem Stand der Technik. Ein dargestellter Lufttrockner 10 gemäß dem Stand der Technik mit einem Drucklufteingang 14, einem Anschluss für ein Mehrkreisschutzventil 56, über den beförderte und aufbereitete Druckluft aufbereitet und weitergeleitet wird, einen Kompressorsteuerausgang 38, über den ein Druckluft in den Drucklufteingang 14 fördernder Kompressor 48 angesteuert werden kann, einen Anschluss 58 zur Fremdbefüllung, einen Anschluss 60 zur Reifenbefüllung, einen Regenerationsluftbehälter 40 sowie Entlüftungen 52, 54. Über eine Förderleitung 16 wird die von dem Kompressor 48 geförderte Druckluft zu einer Luftaufbereitungseinrichtung 20 befördert. Stromaufwärts der Luftaufbereitungseinrichtung 20 ist ein Luftablassventil 22 an der Förderleitung 16 angeordnet. Stromabwärts der Luftaufbereitungseinrichtung 20 verzweigt sich die Förderleitung 16 und die in der Luftaufbereitungseinrichtung 20 aufbereitete Druckluft kann sowohl einem Regenerationsluftbehälter 40 als auch dem hinter einem Rückschlagventil 24 angeordneten Anschluss 56 des Mehrkreisschutzventils zugeführt werden. Weiterhin kann stromabwärts des Rückschlagventils 24 Druckluft über ein Reifenfüllventil 62 an dem Anschluss 60 zur Reifenbefüllung entnommen werden. Stromabwärts des Rückschlagventils 24 ist weiterhin ein Abzweig in der Förderleitung 16 vorgesehen, über den eine Ablasssteuerventileinrichtung 26 mit einem pneumatisch betätigbaren Ventil 26' mit Druckluft versorgt wird. Die Ablasssteuerventileinrichtung 26 ist geeignet, den Kompressorsteuerausgang 38 und eine Ablassventilsteuerleitung 64, die mit dem Ablassventil 22 gekoppelt ist, mit Druck zu beaufschlagen. Weiterhin ist in dem Lufttrockner eine Heizung 50 angeordnet, die insbesondere ein Vereisen der Förderleitung 16 beziehungsweise der Entlüftungen 52, 54 verhindern soll. Im Folgenden wir die Funktionsweise des Lufttrockners 10 gemäß dem Stand der Technik kurz erläutert.

Während einer Förderphase wird automatisch Druckluft aus der Förderleitung 16 abgezweigt und in dem Regenerationsluftbehälter 40 gespeichert. Übersteigt das Druckniveau stromabwärts des Rückschlagventils 24 eine vorbestimmte Schwelle, so schaltet das pneumatisch betätigbare Ventil 26' in seinen nicht dargestellten Schaltzustand, wodurch gleichzeitig der Kompressorsteuerausgang 38 und die Ablassventilsteuerleitung 64 mit Druck beaufschlagt werden. Dadurch kann sowohl der Kompressor 48 in einen energiesparenden Betriebsmodus versetzt werden, als auch das Luftablassventil 22 in seinen nicht dargestellten Schaltzustand überführt werden. Nunmehr ist die Förderleitung 16 über das Luftablassventil 22 mit der Entlüftung 54 gekoppelt und die in dem Regenerationsluftbehälter 40 gespeicherte Regenerationsluft kann über die Luftaufbereitungseinrichtung 20 durch das Luftablassventil 22 und die Entlüftung 54 rückströmen, wobei ein in der Luftaufbereitungseinrichtung 20 angeordnetes Trockenmittel regeneriert wird. Der Regenerationszyklus wird erst unterbrochen beziehungsweise beendet, falls das Druckniveau stromabwärts des Rückschlagventil 24 unter einer vorgegebene Schwelle zum Schalten des pneumatisch betätigbaren Ventils 26' sinkt, wodurch das Luftablassventil 22 wieder in seinen dargestellten Schaltzustand überführt wird und der Kompressor 48 die Luftförderung wieder aufnimmt. Der Regenerationszyklus des dargestellten Lufttrockners 10 wir daher im Allgemeinen grundsätzlich mit dem gesamten in dem Regenerationsluftbehälter 40 vorhandenen Druckluftvorrat durchgeführt.

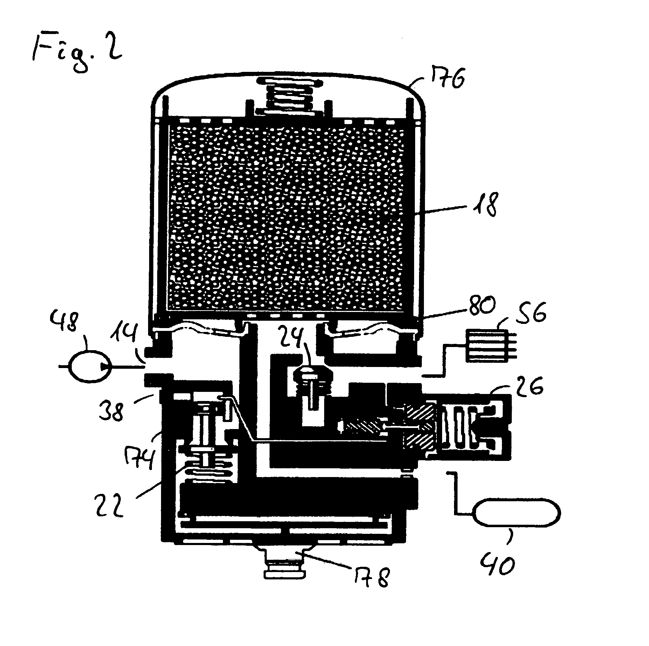

Figur 2 zeigt einen Querschnitt durch einen Lufttrockner mit aufgesetzter Lufttrocknerpatrone gemäß dem Stand der Technik. Eine Lufttrocknerpatrone 76 mit einem Trockenmittel 18 ist auf ein Lufttrocknergehäuse 74 mit einem daran angeordneten Schalldämpfer 78 aufgesetzt. Weiterhin ist ein Filter 80 im unteren Bereich der Lufttrocknerpatrone 76 dargestellt, der das Trockenmittel 18 und die über das Mehrkreisschutzventil 56 angeschlossenen Verbraucher vor Verunreinigung durch Öl- und Schmutzpartikeln schützt. Im Inneren des Lufttrocknergehäuses 74 sind luftführende Kanäle zwischen einzelnen bereits im Zusammenhang mit Figur 1 beschriebenen Bestandteilen des Lufttrockners sichtbar.

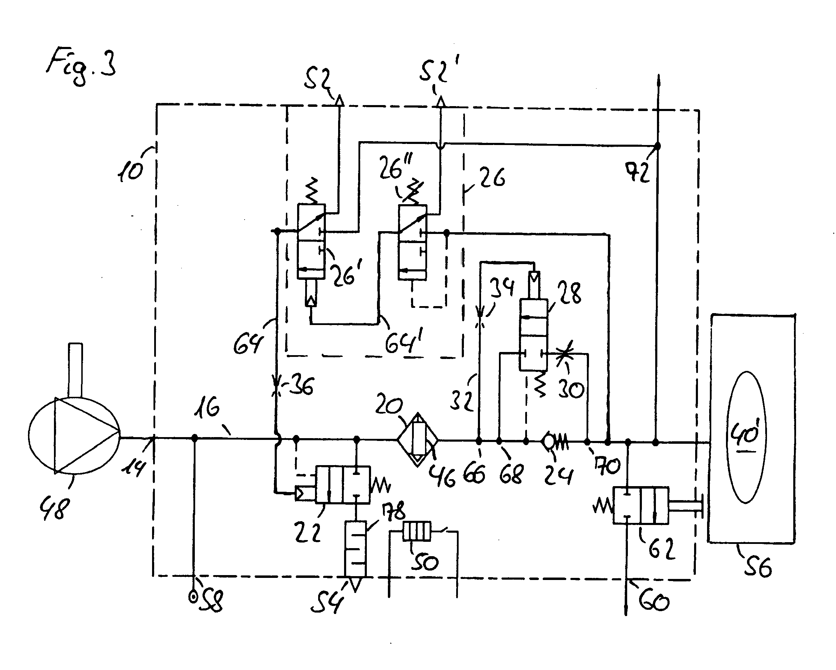

Figur 3 zeigt eine schematische Ventilschaltung einer ersten Ausführungsform eines erfindungsgemäßen Lufttrockners. Der dargestellte Lufttrockner 10 unterscheidet sich von dem aus Figur 1 bekannten Lufttrockner gemäß dem Stand der Technik insbesondere durch das Fehlen eines Regenerationsluftbehälters. Stattdessen ist ein Regenerationssteuerventil 28 parallel zu dem Rückschlagventil 24 an der Förderleitung 16 über einen zweiten Knotenpunkt 68 und einen dritten Knotenpunkt 70 angeschlossen. Das Regenerationssteuerventil 28 wird über eine pneumatische Steuerleitung 32 in der eine Drossel 34 angeordnet ist, pneumatisch gesteuert, wobei die pneumatische Steuerleitung 32 über einen ersten Knotenpunkt 66 zwischen der Luftaufbereitungseinrichtung 20 und dem Rückschlagventil 24 an die Förderleitung 16 gekoppelt ist. Zwischen dem zweiten Knotenpunkt 68 und dem dritten Knotenpunkt 70 ist somit über das Regenerationssteuerventil 28 ein Druckluftpfad zur Umgehung des Rückschlagventils 24 realisiert, in welchem eine Regenerationsleitungsdrossel 30 in Serie mit dem Regenerationssteuerventil 28 angeordnet ist. Die Luftaufbereitungseinrichtung 20 verfügt weiterhin über einen Zyklonfilter 46, der in einer Förderphase stromaufwärts eines in Figur 3 nicht dargestellten in der Luftaufbereitungseinrichtung 20 jedoch vorhandenen Trockenmittels angeordnet ist. Die Ablasssteuerventileinrichtung 26 verfügt neben dem bereits aus der Figur 1 bekannten pneumatisch betätigbaren Ventil 26' über ein weiteres pneumatisch betätigbares Ventil 26", das das pneumatisch betätigbare Ventil 26' über eine pneumatische Leitung 64' vorsteuert. Das pneumatisch betätigbare Ventil 26' ist weiterhin über einen vierten Knotenpunkt 72 direkt mit der Förderleitung 16 gekoppelt und kann mit dem von dort bereitgestellten Druck, wie bereits aus Figur 1 bekannt, über eine Ablassventilsteuerleitung 64 das Ablassventil 22 ansteuern. Die Ablasssteuerventileinrichtung 26 verfügt neben der Entlüftung 52 für das pneumatisch betätigbare Ventil 26' daher auch über eine Entlüftung 52' für das weitere pneumatisch betätigbare Ventil 26". Im Gegensatz zu dem in Figur 1 dargestellten Lufttrockner verfügt der in Figur 3 dargestellte Lufttrockner 10 nicht über einen Kompressorsteuerausgang 38, wobei ein solcher jedoch vorgesehen sein könnte. Der dargestellte Kompressor 48 kann in einer beliebigen dem Fachmann bekannten jedoch nicht dargestellten Weise zu Beginn einer Regenerationsphase in eine energiesparende Betriebsweise geschaltet werden. In der Ablassventilsteuerleitung 64 ist weiterhin eine Ablassventildrossel 36 angeordnet, die das Schalten des Ablassventils 22 gegenüber dem Schalten des pneumatisch betätigbaren Ventils 26' verzögert. Die Ablasssteuerventileinrichtung 26 kann analog zu Figur 1 auch lediglich durch das pneumatisch betätigbare Ventil 26' realisiert werden. Innerhalb des Anschlusses 56 für ein Mehrkreisschutzventil ist ein Vorratsbehälter 40' dargestellt, welcher insbesondere der Vorratsbehälter sein kann, der über den Anschluss 56 des Mehrkreisschutzventils als Vorratsbehälter einer nicht dargestellten Betriebsbremse des Nutzfahrzeugs dient. Im Bereich der Entlüftung 54 ist weiterhin schematisch angedeutet der bereits aus Figur 2 bekannte Schalldämpfer 78. Das Regenerationssystem, das heißt insbesondere die Zeit- beziehungsweise Druckschaltereinheit oder das entsprechende Magnetventil bei einer Semielektronik, soll durch den Zyklonfilter 46 vor Verschmutzungen geschtzt werden. Im Folgenden wird ein Regenerationszyklus dieser Ausführungsform kurz erläutert.

Von dem Kompressor 48 geförderte Druckluft, die in der Luftaufbereitungseinrichtung 20 aufbereitet wird, wird über die Förderleitung 16 stromabwärts des Rückschlagventils 24 den an dem Anschluss 56 des Mehrkreisschutzventils angeschlossenen Verbrauchern zugeführt, wobei insbesondere auch der Vorratsbehälter 40', der zum Beispiel der Betriebsbremse zugeordnet sein kann, befüllt wird. Das in der Förderleitung 16 auf beiden Seiten des Rückschlagventils 24 herrschende Druckniveau wird dabei langsam anwachsen. Ist das Druckniveau an dem ersten Knotenpunkt 66 über den Schaltdruck des Regenerationssteuerventils 28 hinaus angewachsen, so wird das Regenerationssteuerventil 28 über die pneumatische Steuerleitung 32 betätigt und schaltet in seinen nicht dargestellten Schaltzustand, wodurch ein Regenerationsluftpfad zwischen dem zweiten Knotenpunkt 68 und dem dritten Knotenpunkt 70 parallel zu dem Rückschlagventil 24 freigegeben wird. Ist weiterhin das Druckniveau stromabwärts des Rückschlagventils ausreichend hoch, um das weitere pneumatische Ventil 26" zu betätigen, so wird über die pneumatische Leitung 64' das pneumatisch betätigbare Ventil 26' betätigt, welches seinerseits über die Ablassventilsteuerleitung 64 das Luftablassventil 22 in seinen nicht dargestellten Schaltzustand überführt und die Förderleitung 16 mit der Entlüftung 54 über den Schalldämpfer 78 koppelt. Gleichzeitig sollte der Kompressor in einer dem Fachmann bekannten Weise in eine energiesparende Betriebsweise überführt werden, wodurch auch durch den Kompressor 48 erzeugter Staudruck in der Förderleitung 16 während des nun eingeleiteten Regenerationszyklus reduziert wird. In dem Vorratsbehälter 40' der Betriebsbremse gespeicherte Druckluft kann nun über den Anschluss 56 des Mehrkreisschutzventils, zum Beispiel durch ein in dem Mehrkreisschutzventil vorgesehenes Überströmventil zurück in die Förderleitung 16 strömen und das Rückschlagventil 24 über den Regenerationsluftpfad zwischen dem dritten Knotenpunkt 70 und dem zweiten Knotenpunkt 68 umgehen, wobei die Regenerationsluft durch die Regenerationsleitungsdrossel 30 einen definierten Volumenstrom nicht überschreitet. Von dem zweiten Knotenpunkt 68 aus kann die Regenerationsluft über die Luftaufbereitungseinrichtung 20 und das Luftablassventil 22 zur Entlüftung 54 strömen und dort abgelassen werden. Dabei regeneriert der Regenerationsluftstrom die in der Luftaufbereitungseinrichtung 20 angeordneten Komponenten.

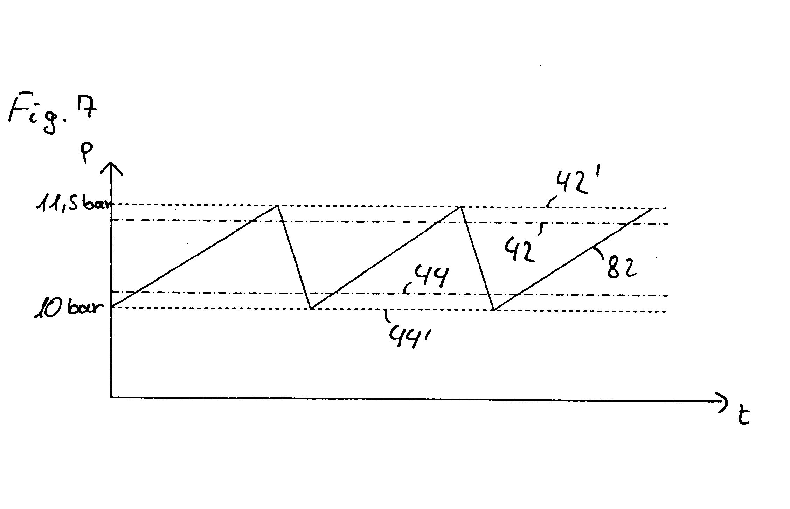

Durch das Öffnen des Luftablassventils 22 sinkt der an dem ersten Knotenpunkt 66 anstehende Druck ab, wodurch auch die pneumatische Steuerleitung 32 einen Druckverlust erfährt. Aufgrund der Drossel 34 in der pneumatischen Steuerleitung 32 wird jedoch das zum erneuten Schalten des Regenerationssteuerventils notwendige niedrigere Druckniveau erst nach einer durch den Drosselquerschnitt der Drossel 34 einstellbaren Zeitspanne erreicht. Der Regenerationszyklus des dargestellten Lufttrockners 10 ist daher in seiner zeitlichen Länge einstellbar, weshalb insbesondere nicht der gesamte in den Vorratsbehälter 40' vorhandene Druckluftvorrat 40 zur Regeneration der Luftaufbereitungseinrichtung 20 verwendet wird. Nach dem erneuten Schalten des Regenerationsteuerventils 28 ist der Regenerationsluftpfad wieder geschlossen und der Bereich der Förderleitung 16 zwischen dem Drucklufteingang 14 und dem Rückschlagventil 24 ist drucklos geschaltet. Sinkt das Druckniveau hinter dem Rückschlagventil 24 unter einen einstellbaren Wert ab, so ist eine Nachförderung von Druckluft notwendig. Das pneumatisch betätigbare Ventil 26' wird auch als Gouverner- oder Druckreglervorsteuerventil bezeichnet. Das pneumatisch betätigbare Ventil 26' ist einstellbar, zum Beispiel über eine Feder, und hat dadurch eine beabsichtigte einstellbare Schalthyterese welche den in Figur 7 dargestellten Differenzdruck zwischen Abschaltdrücken 42' und 44' definiert. Dass weitere pneumatisch betätigbare Ventil 26" ist optional. Die Druckbohrung 64' ist vom Knoten 70 ausgehend in der Regel mit Druck beaufschlagt und mit dem pneumatisch betätigbaren Ventil 26' verbunden. Das weitere pneumatisch betätigbare Ventil 26" kann zu einer Fernsteuerung des Ventils 26' unter einem bestimmten Druck dienen, wodurch ein Entleeren der Druckleitung 16 unterhalb des in Figur 7 beschriebenen unteren Ablassdruckniveaus 44' möglich ist. Nach Beendigung der Entlüftung kann der Kompressor auf eine dem Fachmann bekannte Weise wieder in seine Förderbetriebsweise geschaltet werden, wodurch er wieder über den Drucklufteingang 14 Druckluft in die Förderleitung 16 fördert. Aufgrund der in der Ablassventilsteuerleitung 64 angeordneten Ablassventildrossel 36 ist die Überführung des Ablassventils 22 in seinen dargestellten Schaltzustand verzögert. Daher kann der Kompressor 48 zunächst geförderte Druckluft über die Entlüftung 54 auswerfen, wodurch die Förderleitung 16 gespült wird. Nach dem Überführen des Ablassventils 22 in seinen dargestellten Schaltzustand ist die Regenerationsphase beendet und die Druckluftförderung wieder aufgenommen. Eine erneute Regenerationsphase kann eingeleitet werden, sobald ein ausreichend hohes Druckniveau am pneumatischen Steuereingang des Regenerationssteuerventils 28 ansteht.

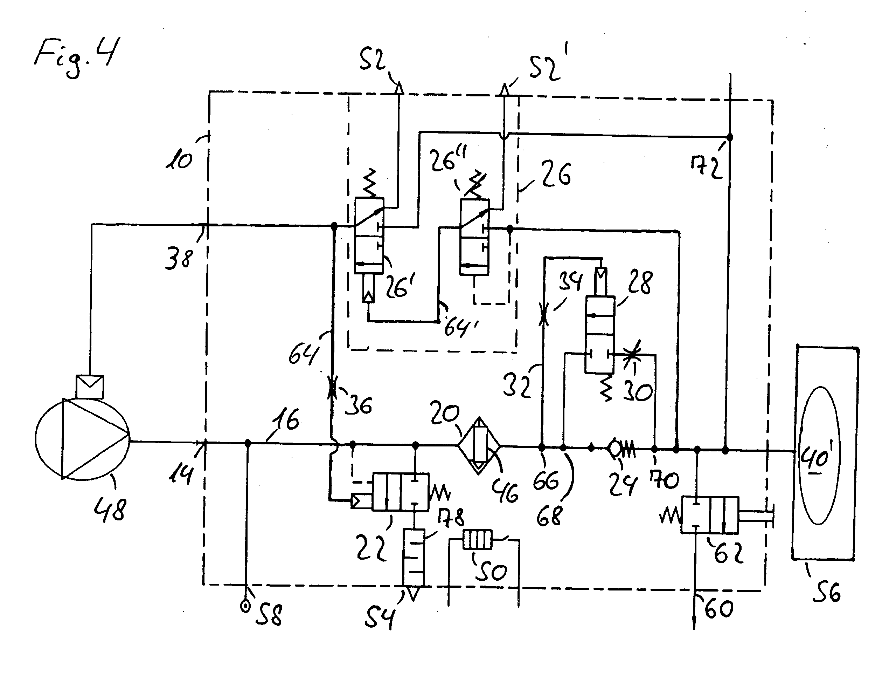

Figur 4 zeigt eine schematische Ventilschaltung einer zweiten Ausführungsform eines erfindungemäßen Lufttrockners. Die in Figur 4 dargestellte Ausführungsform unterscheidet sich von der in Figur 3 dargestellten im Wesentlichen durch die explizite Ausführung eines Kompressorsteuerausgangs 38 der direkt über einen pneumatischen Kompressorsteuereingang mit dem Kompressor 48 gekoppelt ist. Das Betätigen des pneumatisch betätigbaren Ventils 26' wird daher sowohl das Ablassventil 22 in seinen nicht dargestellten Schaltzustand überführen als auch den Kompressor 48 in eine energiesparende Betriebsweise versetzen. Aufgrund der in der Ablassventilsteuerleitung 64 vorgesehenen Ablassventildrossel 36 wird das Ablassventil 22 erst nach dem Überführen des Kompressors 48 in eine energiesparende Betriebsweise geöffnet beziehungsweise erst nach dem Überführen des Kompressors in eine Förderbetriebsart geschlossen. Auf diese Weise ist automatisch eine Spülung der Förderleitung 16 sichergestellt.

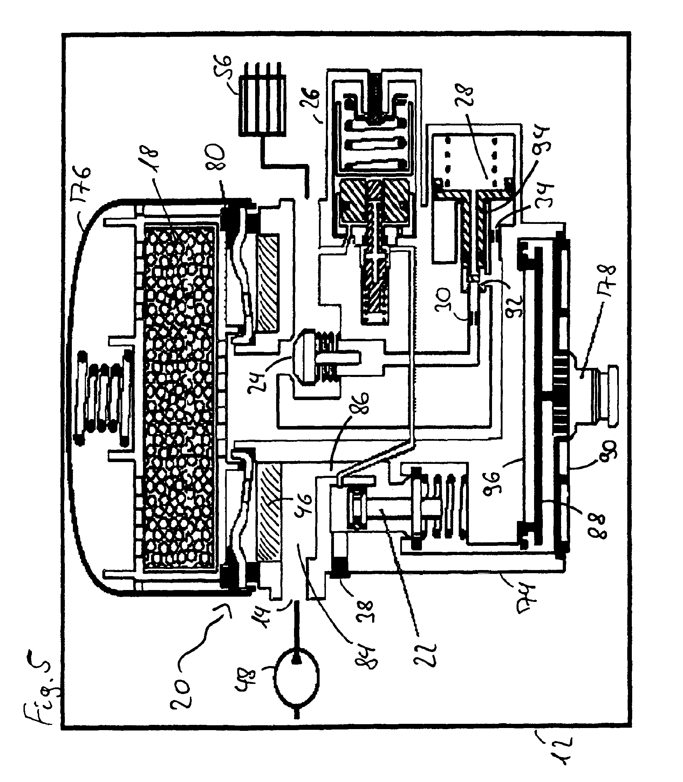

Figur 5 zeigt einen Querschnitt durch einen erfindungsgemäßen Lufttrockner mit aufgesetzter Lufttrocknerpatrone. Die Darstellung in Figur 5 ist analog zur Darstellung in Figur 2, wobei jedoch das Regenerationssteuerventil 28 und die Regenerationsleitungsdrossel 30 sowie die Drossel 34 im Zusammenhang mit dem Zyklonfilter 46 als wesentlicher Unterschied anzumerken sind. Die Luftaufbereitungseinrichtung 20 umfasst den Zyklonfilter 46, der in dem Gehäuse 74 integriert ist, wobei das Gehäuse 74 unterhalb der scheibenartig ausgeführten Zyklonfiltereinrichtung 46 ein Ölsammelbecken 84 aufweist, an dessen tiefster Stelle eine Spülbohrung 86 angeordnet ist, um in einer Abschaltphase des Kompressors 48 den durch die Schwerkraft beziehungsweise Zentrifugalkraft abgeschiedenen Ölsumpf ausspülen zu können. Rechtwinklig dazu angeordnet ist das Regenerationssteuerventil 28. Der Regenerationssteuerventilsitz 92 ist auf einer axialen Symmetrieachse des kreisrunden Regenerationssteuerventils 28 ebenfalls rechtwinklig zur Ebene des Zyklonfilters 46 angeordnet, wodurch auch noch sekundär ausgeschiedenen Schmutzpartikel infolge ihrer eigenen Masse ausgefällt werden können und damit die Ventilschaltung in ihrer Funktion nicht beeinträchtigen. Der für die integrierten Schalldämpfereinlagen 88 benötigte Bauraum in Form einer Tasche 96 ist an der tiefsten Stelle des Gehäuses 74 vorgesehen. Diese Schalldämpfereinlagen 88 werden durch eine formschlüssig mit dem Gehäuse 74 verbundene Abschlussplatte 90 fixiert. Hierdurch ist eine einfache Ausformung aller für den Zyklonfilter 46, das Regenerationssteuerventil 28 und die Tasche 96 notwendigen Gehäusevertiefungen in dem Gehäuse 74 möglich. Der dadurch ermöglichte einfache Werkzeugaufbau erlaubt kurze Fertigungstaktzeiten, da es keine kritischen Funktionsüberschneidungen beim Öffnen der Werkzeugschieber und Kerne gibt. In dem Gehäuse 74 kann anstelle des mechanisch wirkenden Regenerationssteuerventils 28 auch ein elektrisch betätigbares Regenerationsmagnetventil integriert sein, wobei die Ankerventilsitzflächen dieses Regenerationsmagnetventils ebenfalls senkrecht zur Zyklonfilterebene angeordnet sind. Das Mehrkreisschutzventil 56, das beispielsweise als ein Vierkreisschutzventil ausgeführt sein kann, kann ebenfalls noch in das Gehäuse 74 integriert werden, wobei dann die Ventilsitze der dem Mehrkreisschutzventil 56 zugeordneten Ventileinrichtungen aus oben genannten Gründen auch rechtwinklig zur Zyklonebene angeordnet werden sollten. Damit ist ein kompakter Einbau dieser Filter- und Trocknereinrichtung auch in Nutzfahrzeuge 12 möglich welche, zum Beispiel infolge einer Niederflurbauweise, wie sie beispielsweise bei Stadtbussen zum Einsatz kommt, sehr wenig Einbauplatz haben. Diese Klasse von Nutzfahrzeugen 12 profitiert infolge des hohen Luftverbrauches und der dadurch bedingten hohen Einschaltdauer des Kompressors in besonderem Maße von der Vorabscheidung des Kompressoröls durch einen Zyklonfilter. Weiterhin verlangen diese Systeme auch die Verwendung einer zeitgesteuerter Regeneration mit einem Regenerationssteuerventil 28, um den Regenerationsluftverbrauch zu begrenzen. Das Ölsammelbecken 84 wird über die Spülbohrung 86 und den seriell nachgeordneten integrierten Schalldämpfer 78 während einer Abschaltphase ausgespült. Über den Drucklufteingang 14 einströmende Druckluft wird zunächst in dem Zyklonfilter 46 von Öl- und Schmutzpartikeln gereinigt. Ein Filter 80 der zum Schutz des Trockenmittels 18 in der Lufttrocknerpatrone 76, die zumindest teilweise mit Trockenmittel 18 gefüllt ist, angeordnet ist, muss daher weniger Öl- und Schmutzpartikel ausfiltern. Die Lebensdauer des Filters 80 wird dadurch erhöht. Weiterhin werden die Drossel 34 und die Regenerationsleitungsdrossel 30 vor Ablagerungen geschützt. Dies ist insofern bedeutsam, da die Drosselquerschnitte das zeitliche Schaltverhalten der Regenerationssteuerung bestimmen. Weiterhin sind die Drosselquerschnitte einstellbar und können zumindest bei der Montage des Lufttrockners an die speziellen Charakteristika der verwendeten Ventileinrichtungen, die fertigungstechnischen Schwankungen unterliegen, angepasst werden. Sämtliche dargestellte Bauteile sind innerhalb eines Nutzfahrzeugs 12 angeordnet. Die Ablagerung von Schmutzpartikeln an kritischen Stellen im Sekundärbereich der Filterpatrone 76 wird durch die Orientierung dreier großer Ausnehmungen in dem Gehäuse 74 reduziert. Hierdurch wird die mögliche Betriebsdauer verlängert. Der Abscheidebereich des Zyklonfilters 46, das heißt das in die Spülbohrung 86 mündende Ölsammelbecken 84, ist als eine dieser Vertiefungen an der Oberseite des Gehäuses 74 ausgeformt und dient der Sammlung des abgeschiedenen Öls. Der Zeitschalter ist in einem rechten Winkel zu dem Ölsammelbecken 84 orientiert, um eventuell noch im Sekundärbereich der Filterpatrone schwebende Schmutzpartikel durch die Schwerkraft vor der empfindlichen Ventileinrichtung abscheiden zu können.

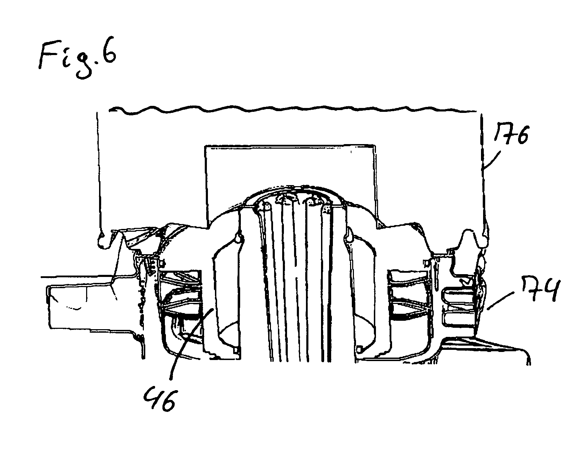

Figur 6 zeigt einen Ausschnitt eines geschnittenen Lufttrockners zur Veranschaulichung der Anordnung des Zyklonfilters. Der dargestellte Zyklonfilter 46 ist im oberen Bereich eines Lufttrocknergehäuses 74 unterhalt einer aufgesetzten Lufttrocknerpatrone 76 in der das Trockenmittel 18 angeordnet ist, angeordnet. Nach dem Abnehmen der Lufttrocknerpatrone 76 kann der Zyklonfilter 46 als einzelnes Bauteil einfach nach oben aus dem Lufttrocknergehäuse 74 entnommen werden. Das Wechseln des Zyklonfilters 46 kann daher separat von einem Austausch der Lufttrocknerpatrone 76 durchgeführt werden.

Figur 7 zeigt den zeitlichen Druckverlauf eines erfindungsgemäßen Lufttrockners. Augetragen ist auf der x-Achse die Zeit t und auf der y-Achse der in dem Lufttrockner herrschende Druck, wobei das Druckniveau an dem nach dem Rückschlagventil stromabwärts angeordneten dritten Knotenpunkt 70 aus den Figuren 3 beziehungsweise 4 in einer Druckverlaufskurve 82 dargestellt ist. Die parallel zur zeitlichen Achse eingezeichneten gestrichelten Linien bezeichnen im Einzelnen:
- ein oberes Druckniveau 42,
- ein oberes Ablassdruckniveau 42',
- ein unteres Druckniveau 44,
- und ein unteres Ablassdruckniveau 44'.

Das obere Druckniveau 42 und das untere Druckniveau 44 beschreiben die Schaltpunkte des Regenerationssteuerventils 28 aus den Figuren 3 beziehungsweise 4. Das obere Ablassdruckniveau 42' und das untere Ablassdruckniveau 44' beschreiben die Schaltpunkte der Ablasssteuerventileinrichtung 26. Die einzelnen zum Schalten der Ventileinrichtungen vorgesehenen Druckniveaus 42, 42', 44, 44' können je nach Bedarf voreingestellt werden. Insbesondere können die einzelnen Druckniveaus 42, 42', 44, 44' nahezu unabhängig voneinander gewählt werden, wobei das obere Druckniveau 42 gleich dem oberen Ablassdruckniveau 42' sein kann, das untere Druckniveau 44 jedoch nicht gleich dem unteren Ablassdruckniveau 44' sein kann. Die Differenz zwischen dem oberen Ablassdruckniveau 42' und dem oberen Druckniveau 42 wird durch den aus Figur 5 bekannten Regenerationsventilsteuerkolben 94 und den Gradienten des Druckabfalls in dem Schalldämpfer 78 beim Abschalten des Kompressors 48 gebildet. Damit die Druckdifferenz sehr klein bleibt, ist eine Nutringdichtung gepaart mit einer Teflonführung im hinteren Auflager des Zeitschalterkolbens, das heißt des Regenerationssteuerventils 28 erforderlich und eine Führung dieses Kolbens mit einem zweitem Auflager im Bereich des Regenerationssteuerventilsitzes 28" erforderlich.

Ausgehend von dem unteren Ablassdruckniveau 44' bei 10 bar beginnt die Druckluftförderung, bis bei einem Druckniveau von 11,5 bar, dem beispielhaft gewählten Abschaltdruck des Lufttrockners, bei dem oberen Ablassdruckniveau 42' der Regenerationszyklus eingeleitet wird. Zuvor wurde bereits bei Erreichen eines oberen Druckniveaus 42 der Regenerationsluftpfad freigegeben und das Druckniveau innerhalb des Lufttrockners fällt in kurzer Zeit wieder bis auf das untere Druckniveau 44 ab. Zu diesem Zeitpunkt wird der Regenerationsluftpfad geschlossen während das Ablassventil weiterhin geöffnet bleiben kann. Wird von den Verbrauchern in der folgenden Zeit Druckluft benötigt, so sinkt, da bislang keine Nachförderung von Druckluft erfolgt, das Druckniveau weiter ab, bis zum Erreichen eines unteren Ablassdruckniveaus 44' bei dem das Ablassventil erneut geschlossen und die Druckluftförderung wieder aufgenommen wird. Das Ablassdruckniveau 44' ist beispielhaft in der Figur 7 mit 10 bar bezeichnet worden. Mit dem Schließen des Ablassventils wird gleichzeitig der Regenerationszyklus beendet und die Druckluftförderung erneut aufgenommen.

### Bezugszeichenliste

- 10: Lufttrockner
- 12: Nutzfahrzeug
- 14: Drucklufteingang
- 16: Förderleitung
- 18: Trockenmittel
- 20: Luftaufbereitungseinrichtung
- 22: Luftablassventil
- 24: Rückschlagventil
- 26: Ablasssteuerventileinrichtung
- 26': pneumatisch betätigbares Ventil
- 26": weiteres pneumatisch betätigbares Ventil
- 28: Regenerationssteuerventil
- 30: Regenerationsleitungsdrossel
- 32: pneumatische Steuerleitung
- 34: Drossel
- 36: Ablassventildrossel
- 38: Kompressorsteuerausgang
- 40: Regenerationsluftbehälter
- 40': Vorratsbehälter
- 42: oberes Druckniveau
- 42': oberes Ablassdruckniveau
- 44: unteres Druckniveau
- 44': unteres Ablassdruckniveau
- 46: Zyklonfilter
- 48: Kompressor
- 50: Heizung
- 52: Entlüftung
- 52': Entlüftung
- 54: Entlüftung
- 56: Anschluss Mehrkreisschutzventil
- 58: Anschluss Fremdbefüllung
- 60: Anschluss Reifenbefüllung
- 62: Reifenfüllventil
- 64: Ablassventilsteuerleitung
- 64': pneumatische Leitung
- 66: erster Knotenpunkt
- 68: zweiter Knotenpunkt
- 70: dritter Knotenpunkt
- 72: vierter Knotenpunkt
- 74: Lufttrocknergehäuse
- 76: Lufttrocknerpatrone
- 78: Schalldämpfer
- 80: Filter
- 82: Druckverlauf
- 84: Ölsammelbecken
- 86: Spülbohrung
- 88: Schalldämmung
- 90: Abschlussplatte
- 92: Regenerationssteuerventilsitz
- 94: Regenerationsventilsteuerkolben
- 96: Tasche

## Patentansprüche

1. Lufttrockner (10) mit einer in einem gemeinsamen Gehäuse (74) integrierten Regenerationssteuerung für ein Nutzfahrzeug (12), wobei der Lufttrockner (10)
- einen Drucklufteingang (14),
- eine in einer Förderleitung (16) angeordnete ein Trockenmittel (18) umfassende Luftaufbereitungseinrichtung (20),
- ein an der Förderleitung (16) in einer Förderphase stromaufwärts der Luftaufbereitungseinrichtung (20) angeordnetes Luftablassventil (22),
- ein in einer Förderphase in der Förderleitung (16) stromabwärts der Luftaufbereitungseinrichtung (20) angeordnetes Rückschlagventil (24),
- eine, abhängig von dem Druckniveau in der Förderleitung (16), das Luftablassventil (22) vorsteuernde Ablasssteuerventileinrichtung (26) umfasst, und
- wobei ein abhängig von dem Druckniveau in der Förderleitung schaltendes Regenerationssteuerventil (28) parallel zu dem Rückschlagventil (24) an der Förderleitung (16) angeordnet ist,
**dadurch gekennzeichnet,**
- **dass** die Luftaufbereitungseinrichtung (20) einen Zyklonfilter (46) zum Abscheiden von Öl- und Schmutzpartikeln umfasst und
- **dass** in einer pneumatischen Steuerleitung (32) zum Ansteuern des Regenerationssteuerventils (28) eine Drossel (34) angeordnet ist.

2. Lufttrockner (10) nach Anspruch 1, **dadurch gekennzeichnet, dass** ein Mehrkreisschutzventil (56) in dem gemeinsamen Gehäuse (74) des Lufttrockners (10) integriert ist.

3. Lufttrockner (10) nach Anspruch 1 oder 2, **dadurch gekennzeichnet, dass** in Serie zu dem Regenerationssteuerventil (28) und parallel zu dem Rückschlagventil (24) eine Regenerationsleitungsdrossel (30) angeordnet ist.

4. Lufttrockner (10) nach einem der vorhergehenden Ansprüche, **dadurch gekennzeichnet, dass** die in dem Lufttrockner (10) angeordnete Regenerationsleitungsdrossel (30) und/oder die Drossel (34) zumindest teilweise verstellbar sind.

5. Lufttrockner (10) nach einem der vorhergehenden Ansprüche, **dadurch gekennzeichnet, dass** die pneumatische Steuerleitung (32) zum Ansteuern des Regenerationssteuerventils (28) in einer Förderphase Stromaufwärts des Rückschlagventils (24) angeordnet ist.

6. Lufttrockner (10) nach einem der vorhergehenden Ansprüche, **dadurch gekennzeichnet, dass** das Regenerationssteuerventil (28), insbesondere ein Regenerationsventilsteuerkolben (94) und ein Regenerationssteuerventilsitz (92) des Regenerationssteuerventils (28), während eines normalen Betriebszustands rechtwinklig zur Erdanziehungskraft angeordnet ist.

7. Lufttrockner (10) nach einem der vorhergehenden Ansprüche, **dadurch gekennzeichnet, dass** ein Kompressorsteuerausgang (38) des Lufttrockners (10) zusammen mit einer pneumatischen Steuerleitung (64) des Luftablassventils (22) belüftet wird.

8. Lufttrockner (10) nach einem der vorhergehenden Ansprüche, **dadurch gekennzeichnet, dass** die Ablasssteuerventileinrichtung (26) ein pneumatisch betätigbares Ventil (26') umfasst, das in einer Schaltstellung eine pneumatische Steuerleitung (64) des Luftablassventils (22) direkt belüftet.

9. Lufttrockner (10) nach Anspruch 8, **dadurch gekennzeichnet, dass** die Ablasssteuerventileinrichtung (26) ein weiteres pneumatisch betätigbares Ventil (26") umfasst, das das pneumatisch betätigbare Ventil (26') pneumatisch vorsteuert.

10. Lufttrockner (10) nach einem der vorhergehenden Ansprüche, **dadurch gekennzeichnet, dass** der Zyklonfilter (46) separat von dem Trockenmittel (18) austauschbar ist.

11. Verfahren zum Betreiben eines Lufttrockners (10) mit integrierter Regenerationssteuerung für ein Nutzfahrzeug (12), wobei der Lufttrockner (10)
- einen Drucklufteingang (14),
- eine in einer Förderleitung (16) angeordnete ein Trockenmittel (18) umfassende Luftaufbereitungseinrichtung (20),
- ein an der Förderleitung (16) in einer Förderphase stromaufwärts der Luftaufbereitungseinrichtung (20) angeordnetes Luftablassventil (22),
- ein in einer Förderphase in der Förderleitung (16) stromabwärts der Luftaufbereitungseinrichtung (20) angeordnetes Rückschlagventil (24) und
- eine, abhängig von dem Druckniveau in der Förderleitung (16), das Luftablassventil (22) vorsteuernde Ablasssteuerventileinrichtung (26) umfasst,
- wobei bei einem Überschreiten eines oberen Druckniveaus (42) in der Förderleitung (16) ein parallel zu dem Rückschlagventil (24) an der Förderleitung (16) angeordnetes Regenerationssteuerventil (28) angesteuert wird und einen Regenerationsluftpfad freigibt, und
- wobei bei einem Unterschreiten eines unteren Druckniveaus (44) in der Förderleitung (16) das parallel zu dem Rückschlagventil (24) an der Förderleitung (16) angeordnete Regenerationssteuerventil (28) nicht mehr angesteuert und der Regenerationsluftpfad wieder geschlossen wird,
**dadurch gekennzeichnet,**
- **dass** in einem der Luftaufbereitungseinrichtung (20) zugeordneten Zyklonfilter (46) Öl- und Schmutzpartikel abgeschieden werden, und
- **dass** das Regenerationssteuerventil (28) über eine in einer pneumatischen Steuerleitung (32) angeordnete Drossel (34) angesteuert wird.

12. Verfahren nach Anspruch 11, **dadurch gekennzeichnet, dass** eine in dem Regenerationsluftpfad angeordnete einstellbare Regenerationsleitungsdrossel (30) in Abhängigkeit von den genauen Betriebseigenschaften des Lufttrockners (10) eingestellt wird.

13. Verfahren nach Anspruch 11 oder 12, **dadurch gekennzeichnet, dass** eine in der pneumatischen Steuerleitung (32) zum Ansteuern des Regenerationssteuerventils (28) angeordnete einstellbare Drossel (34) in Abhängigkeit von den genauen Betriebseigenschaften des Lufttrockners (10) eingestellt wird.

14. Verfahren nach einem der Ansprüche 11 bis 13, **dadurch gekennzeichnet,**
- **dass** die Ablasssteuerventileinrichtung (26) bei einem Überschreiten eines oberen Ablassdruckniveaus (42') in der Förderleitung (16) das Luftablassventil (22) ansteuert und
- **dass** die Ablasssteuerventileinrichtung (26) bei einem Unterschreiten eines unteren Ablassdruckniveaus (44') in der Förderleitung (16) das Luftablassventil (22) nicht mehr ansteuert.

## Claims

1. Air drier (10) with an regeneration control integrated in a common housing (74) for a commercial vehicle (12), wherein the air drier (10) comprises
- a compressed air inlet (14),
- an air preparation device (20) located in a delivery line (16) and containing a desiccant (18),
- an air outlet valve (22) located on the delivery line (16) upstream of the air preparation device (20) in a delivery phase,
- a check valve (24) located in the delivery line (16) downstream of the air preparation device (20) in a delivery phase,
- an outlet control valve device (26) pilot-controlling the air outlet valve (22) as a function of the pressure level in the delivery line (16), and
- wherein a regeneration control valve (28) switching in response to the pressure level in the delivery line is located on the delivery line (16) parallel to the check valve (24),
**characterised in that**
- the air preparation device (20) comprises a cyclone filter (46) for the removal of oil and dirt particles, and
- **in that** a restrictor (34) is provided in a pneumatic control line (32) for the control of the regeneration control valve (28).

2. Air drier (10) according to claim 1, **characterised in that** a multi-circuit protection valve (56) is integrated into the common housing (74) of the air drier (10).

3. Air drier (10) according to claim 1 or 2, **characterised in that** a regeneration line restrictor (30) is arranged in series with the regeneration control valve (28) and parallel to the check valve (24).

4. Air drier (10) according to any of the preceding claims, **characterised in that** the regeneration line restrictor (30) in the air drier (10) and/or the restrictor (34) is/are at least partially adjustable.

5. Air drier (10) according to any of the preceding claims, **characterised in that** the pneumatic control line (32) for the control of the regeneration control valve (28) is located upstream of the check valve (24) in a delivery phase.

6. Air drier (10) according to any of the preceding claims, **characterised in that** the regeneration control valve (28), in particular a regeneration control valve piston (94) and a regeneration control valve seat (92) of the regeneration control valve (28), is/are arranged at right angles to the gravitational force during a normal operating state.

7. Air drier (10) according to any of the preceding claims, **characterised in that** a compressor control outlet (38) of the air drier (10) is ventilated together with a pneumatic control line (64) of the air outlet valve (22).

8. Air drier (10) according to any of the preceding claims, **characterised in that** the outlet control valve device (26) comprises a pneumatically actuated valve (26') which directly ventilates a pneumatic control line (64) of the air outlet valve (22) in one switching position.

9. Air drier (10) according to claim 8, **characterised in that** the outlet control valve device (26) comprises a further pneumatically actuated valve (26") which pneumatically pilot-controls the pneumatically actuated valve (26').

10. Air drier (10) according to any of the preceding claims, **characterised in that** the cyclone filter (46) can be replaced separately from the desiccant (18).

11. Method for operating an air drier (10) with an integrated regeneration control for a commercial vehicle (12), wherein the air drier (10) comprises
- a compressed air inlet (14),
- an air preparation device (20) located in a delivery line (16) and containing a desiccant (18),
- an air outlet valve (22) located on the delivery line (16) upstream of the air preparation device (20) in a delivery phase,
- a check valve (24) located in the delivery line (16) downstream of the air preparation device (20) in a delivery phase, and
- an outlet control valve device (26) pilot-controlling the air outlet valve (22) as a function of the pressure level in the delivery line (16),
- wherein, if an upper pressure level (42) is exceeded in the delivery line (16), a regeneration control valve (28) located on the delivery line (16) parallel to the check valve (24) is selected and opens a regeneration air path, and
- wherein, if the pressure in the delivery line (16) falls below a lower pressure level (44), the regeneration control valve (28) located on the delivery line (16) parallel to the check valve (24) is no longer selected and the regeneration air path is closed again.
**characterised in that**
- oil and dirt particles are removed in a cyclone filter (46) assigned to the air preparation device (20), and
- **in that** the regeneration control valve (28) is controlled via a restrictor (34) located in a pneumatic control line (32).

12. Method according to claim 11, **characterised in that** an adjustable regeneration line restrictor (30) located in the regeneration air path is adjusted as a function of the precise operating characteristics of the air drier (10).

13. Method according to claim 11 or 12, **characterised in that** an adjustable restrictor (34) located in the pneumatic control line (32) for controlling the regeneration control valve (28) is adjusted as a function of the precise operating characteristics of the air drier (10).

14. Method according to any of claims 11 to 13, **characterised in that**
- the regeneration control valve device (26) selects the air outlet valve (22) if an upper outlet pressure level (42') in the delivery line (16) is exceeded, and
- the regeneration control valve device (26) no longer selects the air outlet valve (22) if the pressure in the delivery line (16) falls below a lower outlet pressure level (42").

## Revendications

1. Dessiccateur (10) d'air ayant une commande de régénération intégrée dans une enveloppe (74) commune pour un véhicule (12) utilitaire, le dessiccateur (10) d'air comprenant :
- une entrée (14) pour de l'air comprimé,
- un dispositif (20) de traitement de l'air comprenant un agent (18) déshydratant, disposé dans un conduit (16) de refoulement,
- une vanne (22) d'évacuation de l'air, montée sur le conduit (16) de refoulement, dans une phase de refoulement, en amont du dispositif (20) de traitement de l'air,
- un clapet anti-retour (24) monté, dans une phase de refoulement, dans le conduit (16) de refoulement, en aval du dispositif (20) de traitement de l'air,
- un dispositif (26) de vanne de commande d'évacuation, pilotant la vanne (22) d'évacuation en fonction du niveau de pression dans le conduit (16) de refoulement et
- dans lequel une vanne (28) de commande de régénération, mise en circuit en fonction du niveau de pression dans le conduit de refoulement, est montée en parallèle avec le clapet anti-retour (24) sur le conduit (16) de refoulement, **caractérisé**
- **en ce que** le dispositif (20) de traitement de l'air comprend un filtre (46) à cyclone, pour la séparation de particules d'huile et de particules de saleté et
- **en ce qu'**un étranglement (34) est disposé dans un conduit (32) pneumatique de commande de la vanne (28) de commande de régénération.

2. Dessiccateur (10) d'air suivant la revendication 1, **caractérisé en ce qu'**une vanne (56) de protection, à plusieurs circuits, est intégrée dans l'enveloppe (74) commune du dessiccateur (10) d'air.

3. Dessiccateur (10) d'air suivant la revendication 1 ou 2, **caractérisé en ce qu'**un étranglement (30) du conduit de régénération est monté en série avec la vanne (28) de commande de régénération et en parallèle avec le clapet anti-retour (24).

4. Dessiccateur (10) d'air suivant l'une des revendications précédentes, **caractérisé en ce que** l'étranglement (30) du conduit de régénération, monté dans le dessiccateur (10) d'air, et/ou l'étranglement (34) sont réglables au moins en partie.

5. Dessiccateur (10) d'air suivant l'une des revendications précédentes, **caractérisé en ce qu'**en le conduit (32) pneumatique de commande de la vanne (28) de commande de régénération est monté, dans une phase de refoulement, en amont du clapet anti-retour (24).

6. Dessiccateur (10) d'air suivant l'une des revendications précédentes, **caractérisé en ce que** la vanne (28) de commande de régénération, notamment un piston (94) de commande de la vanne de régénération et un siège (92) de la vanne (28) de commande de régénération, sont montés, pendant un état de fonctionnement normal, à angle droit par rapport à la force de gravité.

7. Dessiccateur (10) d'air suivant l'une des revendications précédentes, **caractérisé en ce qu'**une sortie (38) de commande de compresseur du dessiccateur (10) d'air est alimentée en air, ensemble avec un conduit (64) pneumatique de commande de la vanne (22) d'évacuation de l'air.

8. Dessiccateur (10) d'air suivant l'une des revendications précédentes, **caractérisé en ce que** le dispositif (26) de vanne de commande d'évacuation comprend une vanne (26') à actionnement pneumatique, qui alimente directement, dans une position de commutation, un conduit (64) pneumatique de commande de la vanne (22) d'évacuation de l'air.

9. Dessiccateur (10) d'air suivant la revendication 8, **caractérisé en ce que** le dispositif (26) de vanne de commande d'évacuation comprend une autre vanne (26") à actionnement pneumatique, qui pilote pneumatiquement la vanne (26') à actionnement pneumatique.

10. Dessiccateur (10) d'air suivant l'une des revendications précédentes, **caractérisé en ce que** le filtre (46) à cyclone peut être remplacé indépendamment de l'agent (18) déshydratant.

11. Procédé pour faire fonctionner un dessiccateur (10) d'air à commande de régénération intégré pour un véhicule (12) utilitaire, dans lequel le dessiccateur (10) d'air comprend
- une entrée (14) pour de l'air comprimé,
- un dispositif (20) de traitement de l'air comprenant un agent (18) déshydratant, disposé dans un conduit (16) de refoulement,
- une vanne (22) d'évacuation de l'air, montée sur le conduit (16) de refoulement, dans une phase de refoulement, en amont du dispositif (20) de traitement de l'air,
- un clapet anti-retour (24) monté, dans une phase de refoulement, dans le conduit (16) de refoulement, en aval du dispositif (20) de traitement de l'air et
- un dispositif (26) de vanne de commande d'évacuation, pilotant la vanne (22) d'évacuation en fonction du niveau de pression dans le conduit (16) de refoulement,
- dans lequel, lorsqu'un niveau (42) supérieur de pression est dépassé dans le conduit (16) de refoulement, une vanne (28) de commande de régénération, montée en parallèle avec le clapet anti-retour (24) sur le conduit (16) de refoulement, est commandée et dégage un trajet pour de l'air de régénération et
- dans lequel, lorsque l'on passe en dessous d'un niveau (44) inférieur de pression dans le conduit (16) de refoulement, la vanne (28) de commande de régénération, montée en parallèle avec le clapet anti-retour (24) dans le conduit (16) de refoulement, n'est plus commandée et le trajet pour de l'air de régénération est refermé,
**caractérisé**
- **en ce que** l'on dépose des particules d'huile et des particules de saleté dans un filtre (46) à cyclone, associé au dispositif (20) de traitement de l'air et
- **en ce que** l'on commande la vanne (28) de commande de régénération par un étranglement (34), disposé dans un conduit (32) pneumatique de commande.

12. Procédé suivant la revendication 11, **caractérisé en ce que** l'on règle, en fonction des propriétés de fonctionnement précises du dessiccateur (10) d'air, un étranglement (30) du conduit de régénération, réglable et disposé dans le trajet pour de l'air de régénération.

13. Procédé suivant la revendication 11 ou 12, **caractérisé en ce que** l'on règle, en fonction des propriétés précises de fonctionnement du dessiccateur (10) d'air, un étranglement (34) réglable, disposé dans le conduit (32) pneumatique de commande de la vanne (28) de commande de régénération.

14. Procédé suivant l'une des revendications 11 à 13, **caractérisé**
- **en ce que** le dispositif (26) de vanne de commande d'évacuation commande la vanne (22) d'évacuation de l'air, lorsqu'un niveau (42') supérieur de pression d'évacuation est dépassé dans le conduit (16) de refoulement et
- **en ce que** le dispositif (26) de vanne de commande d'évacuation ne commande plus la vanne (22) d'évacuation de l'air, lorsque l'on passe au dessous d'un niveau (44') inférieur de pression d'évacuation dans le conduit (16) de refoulement.
